# EUROPÄISCHE PATENTSCHRIFT

(11) **EP 4 197 824 B1**
(45) Veröffentlichungstag und Bekanntmachung des Hinweises auf die Patenterteilung: **26.03.2025**
(21) Anmeldenummer: 22212612.0
(22) Anmeldetag: 09.12.2022
(51) Int. Cl.: B60C 23/04

(54) **VERFAHREN ZUM ÜBERWACHEN DES REIFENDRUCKS**
METHOD FOR MONITORING TYRE PRESSURE
PROCÉDÉ DE SURVEILLANCE DE LA PRESSION DES PNEUS

(30) Priorität: 15.12.2021 DE 102021133293
(43) Veröffentlichungstag der Anmeldung: 21.06.2023
(73) Patentinhaber: Huf Baolong Electronics Bretten GmbH, 75015 Bretten (DE)
(72) Erfinder: Wagner, Markus, 75038 Flehingen (DE)
(74) Vertreter: Twelmeier Mommer & Partner

(56) Entgegenhaltungen:
- EP-A1- 1 826 029
- WO-A2-2005/069993
- WO-A2-92/14620
- CN-A- 108 327 477
- US-A1- 2002 044 050
- US-A1- 2011 054 728

## Beschreibung

Die Erfindung geht aus von einem Verfahren mit den im Oberbegriff des Anspruchs 1 angegebenen Merkmalen, wie es beispielsweise aus US 2002/044050 A1 bekannt ist. Ähnliche Verfahren sind beispielsweise aus EP 1 108 568 A2, CN 108 327 A, WO 2005/069993 A2, US 2011/054728 A1, WO 92/14620 A2 und EP 1 826 029 A1 bekannt.

Moderne Reifendrucküberwachungseinheiten werden an Fahrzeugrädern montiert und enthalten in der Regel einen Drucksensor zum Messen von Reifendruck sowie einen Sender zum drahtlosen Übertragen von Reifendruckdaten. Die Übertragung von Druckdaten erfolgt dabei durch Datensendungen, die jeweils mehrere Datentelegramme mit identischen Druckdaten enthalten. Derartige Datensendungen werden auch als Blöcke oder *blocks* und die Datentelegramme als *frames* bezeichnet. Bei ungünstigen Übertragungsbedingungen kann es immer wieder vorkommen, dass ein Datentelegramm nicht oder unvollständig empfangen wird. Indem eine Datensendung mehrere Datentelegramme mit identischen Druckdaten enthält, wird eine Redundanz geschaffen und die Wahrscheinlichkeit erhöht, dass selbst unter ungünstigen Bedingungen wenigstens eines der Datentelegramme einer Datensendung von einer Zentraleinheit des Fahrzeugs empfangen wird.

Ein erheblicher Teil des Energieverbrauchs einer Reifendrucküberwachungseinheit beruht auf ihrer Sendetätigkeit. Ein ständiges Problem bei der Entwicklung von Reifendrucküberwachungssystemen besteht deshalb darin, die Sendetätigkeit der Reifendrucküberwachungseinheiten dahingehend zu optimieren, dass bei minimalem Energieverbrauch relevante Druckdaten einer Zentraleinheit des Fahrzeugs zeitnah zur Verfügung gestellt werden können. Dies gilt insbesondere für Reifendrucküberwachungseinheiten, die als Energiequelle eine (nicht wieder aufladbare) Batterie enthalten.

Aufgabe der vorliegenden Erfindung ist es, einen Weg aufzuzeigen, wie der Energieverbrauch einer Reifendrucküberwachungseinheit reduziert werden kann, ohne die Versorgung einer Zentraleinheit des Fahrzeugs mit Druckdaten zu beeinträchtigen.

Diese Aufgabe wird durch ein Verfahren mit den im Anspruch 1 angegebenen Merkmalen gelöst. Vorteilhafte Weiterbildungen der Erfindung sind Gegenstand von Unteransprüchen.

Bei einem erfindungsgemäßen Verfahren sendet die Reifendrucküberwachungseinheit Druckdaten in einem ersten Betriebsmodus in Form von Datensendungen, die mehrere Datentelegramme mit identischen Druckdaten enthalten. In einem zweiten Betriebsmodus enthalten zumindest einige der Datensendungen nur ein einziges Datentelegramm. Auf diese Weise kann in dem ersten Betriebsmodus durch eine redundante Übertragung von Reifendruckdaten auch bei ungünstigen Sende- bzw. Empfangsbedungen zuverlässig erreicht werden, dass die Druckdaten von der Zentraleinheit des Fahrzeugs empfangen werden, während in dem zweiten Betriebsmodus in Kauf genommen wird, dass unter Umständen eine Datensendung nicht empfangen wird und die Zentraleinheit somit unter Umständen keine aktuellen Druckdaten erhält. Dafür wird in dem zweiten Betriebsmodus wegen der reduzierten Sendetätigkeit wesentlich weniger Energie verbraucht als im ersten Betriebsmodus.

Der zweite Betriebsmodus ist in Situationen vorteilhaft, in denen es unproblematisch ist, wenn hin und wieder eine Datensendung nicht empfangen wird, beispielsweise einige Zeit nach Fahrtbeginn, wenn sich der Reifendruck zwischen den Datensendungen nicht oder nur unwesentlich ändert. Der erste Betriebsmodus ist dagegen in Situationen vorteilhaft, in denen der Empfang jeder Datensendung bedeutsam ist, etwa bei Fahrtbeginn oder bei einer erheblichen Änderung des Reifendrucks.

Eine vorteilhafte Weiterbildung der Erfindung sieht deshalb vor, dass die Reifendrucküberwachungseinheit bei Fahrtbeginn in dem ersten Betriebsmodus betrieben wird. Beispielsweise kann die Reifendrucküberwachungseinheit einen Beschleunigungssensor enthalten, mit dem ein Fahrtbeginn detektiert wird. Ist dies der Fall geht, die Reifendrucküberwachungseinheit in den ersten Betriebszustand über.

Für den Übergang von dem ersten Betriebsmodus in den zweiten Betriebsmodus können eine Reihe von notwendigen und/oder hinreichenden Bedingungen vorgesehen sein, beispielsweise:
- eine vorgegebene Mindestzeitspanne, die seit Fahrbeginn vergangen sein muss, bevor die Reifendrucküberwachungseinheit in den zweiten Betriebsmodus wechselt, beispielsweise 15 Minuten oder mehr;
- eine Änderung des Reifendrucks im Vergleich zu der letzten Datensendung um weniger als einen vorgegebenen Schwellenwert, beispielsweise weniger als 5% oder um nicht mehr als 2%;
- bei einer Reifendrucküberwachungseinheit, die zusätzlich auch einen Temperatursensor enthält, kann als notwendige Bedingung auch vorgesehen sein, dass die Temperatur in einem vorgegebenen Temperaturintervall liegt, beispielsweise zwischen 0°C und 100°C.

Wenn eine Bedingung als eine notwendige Bedingung gewählt wird, dann bedeutet dies, dass ein Übergang in den zweiten Betriebszustand nur erfolgt, wenn diese Bedingung erfüllt ist. Wenn eine Bedingung als eine hinreichende Bedingung gewählt wird, bedeutet dies, dass ein Übergang in den zweiten Betriebszustand in jedem Fall erfolgt, sobald diese Bedingung erfüllt ist. Beispielsweise können mehrere Bedingungen als notwendige Bedingungen ausgewählt werden und eine hinreichende Bedingung kann dann darin gesehen werden, dass eine vorgegebene Anzahl oder alle diese notwendigen Bedingungen, beispielsweise alle vorstehend genannten Bedingungen, erfüllt sein müssen, damit die Reifendrucküberwachungseinheit in den zweiten Betriebszustand übergeht.

Für den Übergang von dem zweiten Betriebsmodus in den ersten Betriebsmodus können eine Reihe von notwendigen und/oder hinreichenden Bedingungen vorgesehen sein, beispielsweise:
- eine Änderung des Reifendrucks im Vergleich zu der letzten Datensendung um mehr als einen vorgegebenen Schwellenwert, beispielsweise mehr als 2% oder um wenigstens 5%; und/oder
- ein Temperatur von mehr als 100°C.

Die ersten Zeitabstände zwischen den einzelnen Datensendungen im ersten sowie im zweiten Betriebsmodus können konstant sein. Bei konstanten Zeitanständen kann aber der Fall auftreten, dass Reifendrucküberwachungseinheiten von verschiedenen Rädern des Fahrzeugs immer zur selben Zeit mit einer Datensendung beginnen, was den Empfang erschwert. Es kann deshalb vorteilhaft sein, zu die ersten Zeitabstände zu variieren, beispielsweise indem zu einer fest vorgegeben Zeitspanne zufällig oder näherungsweise zufällig eine kleine Zeitspanne addiert wird, die nur einen kleinen Bruchteil der ersten Zeitabstände ausmacht, beispielsweise zwischen der Zeitdauer eines Datentelegramms und dem Dreifachen der Zeitdauer eines Datentelegramms beträgt. Eine vorteilhafte Weiterbildung der Erfindung sieht vor, dass die ersten Zeitabstände zwischen 20 Sekunden und 3 Minuten betragen.

Die zweiten Zeitabstände zwischen den einzelnen Datentelegrammen einer Datensendung im ersten und gegebenenfalls auch im zweiten Betriebsmodus können konstant sein oder geringfügig variieren. Die zweiten Zeitabstände betragen dabei aber nicht mehr als 1% der ersten Zeitabstände. Eine vorteilhafte Weiterbildung der Erfindung sieht vor, dass die zweiten Zeitabstände zwischen 50 ms und 200 ms betragen.

Erfindungsgemäß ist vorgesehen, dass in dem zweiten Betriebsmodus periodisch einige Datensendungen durchgeführt werden, die mehrere Datentelegramme enthalten. Beispielsweise kann jede vierte oder jede fünfte Datensendung aus mehreren Datentelegrammen, beispielsweise 3 Datentelegrammen bestehen. Allgemein gesagt, besteht in dem zweiten Betriebsmodus jede n-te Datensendung aus mehreren Datentelegrammen und die übrigen Datensendungen nur aus einem einzigen Datentelegramm bestehen, wobei n eine natürliche Zahl ist, für die beispielsweise gilt: 10 ≥ n ≥ 3.

Eine weitere vorteilhafte Weiterbildung der Erfindung sieht vor, dass jedes Datentelegramm einen Abschnitt, enthält, der angibt, ob dieses Datentelegramm das einzige Datentelegramm einer Datensendung ist. Wenn eine Datensendung mehrere Datentelegramme enthält, kann dieser Abschnitt zusätzlich auch die Information enthalten, wie viele Datentelegramme in derselben Datensendung noch folgen.

Weitere Einzelheiten und Vorteile der Erfindung werden an einem Ausführungsbeispiel unter Bezugnahme auf die beigefügten Zeichnungen beschrieben. Es zeigen:
- Fig. 1: eine schematische Darstellung eines Reifendrucküberwachungssystems eines Fahrzeugs; und
- Fig. 2: eine schematische Darstellung der Datenübertragung von einer Reifendrucküberwachungseinheit an die Zentraleinheit in einem ersten Betriebsmodus; und
- Fig. 3: eine schematische Darstellung der Datenübertragung von einer Reifendrucküberwachungseinheit an die Zentraleinheit in einem zweiten Betriebsmodus.

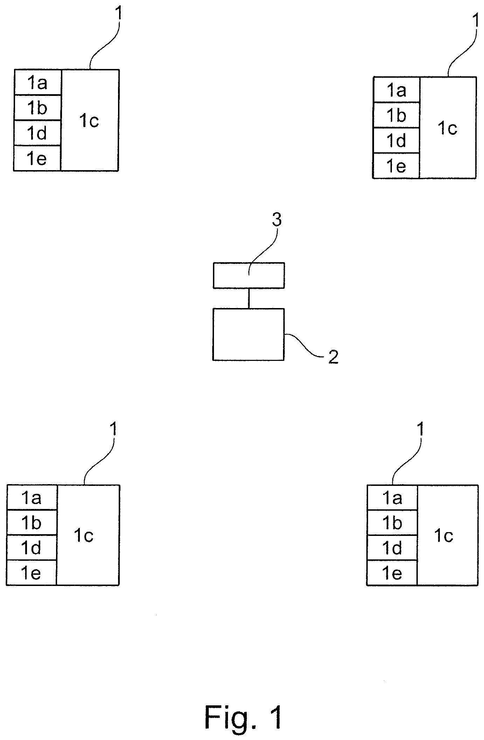

Das in Fig. 1 schematisch dargestellte Reifendrucküberwachsungssystem umfasst mehrere Reifendrucküberwachungseinheiten 1, die jeweils in einem der Luftreifen eines Fahrzeugs angeordnet sind und einen Drucksensor 1a, einen Temperatursensor 1b, einen Beschleunigungssensor 1d, eine Steuereinheit 1c, eine Stromquelle, z.B. eine Batterie, und einen Sender 1e zur drahtlosen Übertragung von Druckdaten aufweisen. Zu dem System gehören außerdem eine ortsfest am Fahrzeug angeordnete Zentraleinheit 2, um von den Reifendrucküberwachungseinheiten 1 gesendete Datentelegramme, die jeweils eine Druckinformation und eine charakteristische Kennung der sendenden Reifendrucküberwachungseinheiten enthalten, auszuwerten. An die Zentraleinheit 2 ist ein Empfänger 3 angeschlossen.

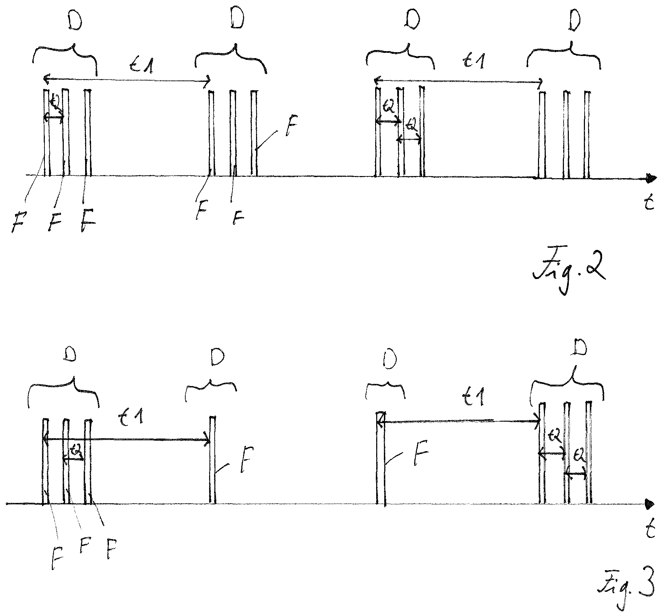

In einem ersten Betriebsmodus senden die Reifendrucküberwachungseinheiten 1 Druckdaten aus, indem in ersten Zeitabständen Datensendungen erfolgen, die jeweils mehrere Datentelegramme mit identischen Druckdaten enthalten, die in zweiten Zeitabständen aufeinander folgen. Fig. 2 zeigt schematisch den zeitlichen Verlauf der Sendetätigkeit in dem ersten Betriebsmodus.

In Fig. 2 sind über der Zeit t vier Datensendungen D dargestellt, die jeweils aus drei Datentelegrammen F bestehen. Innerhalb einer Datensendung D enthalten alle Datentelegramme F dieselben Druckdaten. Die Datenübertragung ist somit redundant und es genügt, wenn der Empfänger 3 von jeder Datensendung D ein Datentelegramm F empfängt.

Die Datensendungen D werden in ersten Zeitabständen t1 ausgesandt, die beispielsweise zwischen 20 Sekunden und 3 Minuten betragen. Innerhalb einer Datensendung D folgen die Datentelegramme F in zweiten Zeitabständen t2 aufeinander, die beispielsweise zwischen 50 ms und 200 ms betragen. Insgesamt betragen die zweiten Zeitabstände t2 weniger als 1% der ersten Zeitabstände t1. Die ersten Zeitabstände t1 und die zweiten Zeitabstände t2 können konstant sein. Um die Wahrscheinlichkeit zu reduzieren, dass Reifendrucküberwachungseinheiten 1 verschiedener Räder des Fahrzeugs immer wieder zu selben Zeit senden, kann es vorteilhaft sein, die ersten Zeitabstände t1 und/oder die zweiten Zeitabstände t2 immer wieder geringfügig zu ändern, beispielsweise indem zu einer fest vorgegebenen Zeitdauer manchmal, beispielsweise zufällig oder pseudozufällig, eine kleine Zeitspanne addiert wird, die zwischen den Einfachen und dem Dreifachen der Zeitdauer eines Datentelegramms F beträgt.

In Fig. 3 ist schematisch der zeitliche Verlauf der Sendetätigkeit in einem zweiten Betriebsmodus dargestellt. In dem zweiten Betriebsmodus erfolgen Datensendungen D ebenso wie in dem ersten Betriebsmodus in ersten Zeitabständen t1. Einige dieser Datensendungen D bestehen aber nur aus einem einzigen Datentelegramm F. Beispielsweise kann in dem zweiten Betriebsmodus vorgesehen sein, dass -wie in Fig. 3 gezeigt- nur jede dritte Datensendung D mehrere Datentelegramme F enthält. Alternativ kann in dem zweiten Betriebsmodus auch jede Datensendung D nur aus einem einzigen Datentelegramm F bestehen oder nur jede n-te Datensendung D aus einem einzigen Datentelegramm F bestehen, wobei n eine natürliche Zahl ist, beispielsweise 10≥n≥3.

Der zweite Betriebsmodus hat den Vorteil eines reduzierten Energiebedarfs, da die Redundanz der Datenübertragung im Vergleich zum ersten Betriebsmodus reduziert ist. Der zweite Betriebsmodus kann deshalb vorteilhaft in Betriebszuständen eingesetzt werden, in denen es unproblematisch ist, wenn hin und wieder eine Datensendung nicht empfangen werden kann, beispielsweise im normalen Fahrtbetrieb. Der erste Betriebsmodus kann bei Fahrbeginn verwendet werden sowie bei kritischen Änderungen des Reifendrucks, z.B. eine Druckänderung um 2% oder mehr seit der letzten Datensendung D, oder einer problematischen Reifentemperatur, z.B. 100°C oder mehr.

Zusätzlich zu dem ersten und dem zweiten Betriebsmodus kann die Reifendrucküberwachungseinheit 1 weitere Betriebsmoden aufweisen, beispielsweise einen Parkmodus mit einer noch weiter reduzierten Datenübertragung, in den bei geparktem Fahrzeug gewechselt wird, und/oder einen Warnmodus, in dem Datensendungen unverzüglich nach Detektion eines kritischen Messwertes, etwa eines gefährlichen Druckabfalls, unverzüglich und in verkürzten Zeitabständen erfolgen.

Der Wechsel in den ersten Betriebszustand bzw. in den zweiten Betriebszustand kann durch eine Reihe von notwendigen und/oder hinreichenden Bedingungen geregelt werden.

Beispielsweise kann die Reifendrucküberwachungseinheit in den ersten Betriebszustand übergehen, wenn eine der folgenden Bedingungen erfüllt ist:
- ein Beschleunigungssensor der Reifendrucküberwachungseinheit einen Fahrtbeginn detektiert;
- ein Temperatursensor der Reifendrucküberwachungseinheit einen Anstieg der Temperatur über einen ersten Temperaturschwellenwert hinaus feststellt, beispielsweise über 100°C;
- ein Änderung des Reifendrucks um mehr als einen ersten Schwellenwert seit der letzten Datensendung D festgestellt wird, beispielsweise eine Änderung um 2% oder mehr.

Beispielsweise kann die Reifendrucküberwachungseinheit während der Fahrt in den zweiten Betriebszustand übergehen, wenn eine, mehrere oder alle der folgenden Bedingungen erfüllt sind:
- seit Fahrtbeginn ist eine vorgegebene Zeitspanne verstrichen, beispielsweise 15 Minuten,
- der Temperatursensor detektiert eine Temperatur, die unter einem zweiten Temperaturschwellenwert liegt, beispielsweise 95°C, wobei dieser zweite Temperaturschwellenwert mit dem ersten Temperaturschwellenwert übereinstimmen oder von ihm abweichen kann;
- seit der letzten Datensendung wurde eine Änderung des Reifendrucks um weniger als einen zweiten Schwellenwert festgestellt, beispielsweise weniger als 2%, wobei dieser zweite Schwellenwert mit dem ersten Schwellenwert übereinstimmen oder von ihm abweichen kann.

## Patentansprüche

1. Verfahren zum Überwachen des Reifendrucks eines Fahrzeugreifens mittels einer Reifendrucküberwachungseinheit (1), die einen Drucksensor (1a) zum Messen von Reifendruck und einen Sender (1e) zum drahtlosen Übertragen von Reifendruckdaten enthält,
wobei Druckdaten in einem ersten Betriebsmodus der Reifendrucküberwachungseinheit (1) übertragen werden, indem in ersten Zeitabständen (t1) Datensendungen (D) erfolgen, die jeweils mehrere Datentelegramme (F) mit identischen Druckdaten enthalten, die in zweiten Zeitabständen (t2) aufeinander folgen, die weniger als 1 % der ersten Zeitabstände (t1) betragen, und
wobei in einem zweiten Betriebsmodus der Reifendrucküberwachungseinheit (1) zumindest einige der Datensendungen (D), die in ersten Zeitabständen (t1) aufeinander folgen, nur aus einem einzigen Datentelegramm (F) bestehen, **dadurch gekennzeichnet, dass**
in dem zweiten Betriebsmodus jede n-te Datensendung (D) aus mehreren Datentelegrammen (F) und die übrigen Datensendungen (D) nur aus einem einzigen Datentelegramm (F) bestehen, wobei n eine natürliche Zahl zwischen 3 und 10 ist.

2. Verfahren nach Anspruch 1, **dadurch gekennzeichnet, dass** Druckdaten in dem ersten Betriebsmodus übertragen werden, wenn die Reifentemperatur einen oberen Schwellenwert überschreitet, vorzugsweise mehr als 100°C beträgt.

3. Verfahren nach einem der vorstehenden Ansprüche, **dadurch gekennzeichnet, dass** Druckdaten in dem ersten Betriebsmodus übertragen werden, wenn eine Änderung des Reifendrucks seit der letzten Datensendung (D) einen Schwellenwert überschreitet.

4. Verfahren nach einem der vorstehenden Ansprüche, **dadurch gekennzeichnet, dass** die Reifendrucküberwachungseinheit (1) bei Fahrbeginn in den ersten Betriebsmodus übergeht.

5. Verfahren nach einem der vorstehenden Ansprüche, **dadurch gekennzeichnet, dass** eine notwendige oder hinreichende Bedingung für einen Übergang der Reifendrucküberwachungseinheit (1) in den zweiten Betriebszustand darin besteht, dass eine Änderung des Reifendrucks seit der letzten Datensendung (D) unter einem Schwellenwert liegt.

6. Verfahren nach einem der vorstehenden Ansprüche, **dadurch gekennzeichnet, dass** eine notwendige oder hinreichende Bedingung für einen Übergang der Reifendrucküberwachungseinheit (1) in den zweiten Betriebszustand darin besteht, dass eine von einem Temperartursensor (1b) der Reifendrucküberwachungseinheit (1) gemessenen Temperatur in einem vorgegebenen Temperaturbereich liegt.

7. Verfahren nach einem der vorstehenden Ansprüche, **dadurch gekennzeichnet, dass** eine notwendige oder hinreichende Bedingung für einen Übergang der Reifendrucküberwachungseinheit (1) in den zweiten Betriebszustand darin besteht, dass seit Fahrtbeginn eine vorgegebene Zeit vergangen ist.

8. Verfahren nach einem der vorstehenden Ansprüche, **dadurch gekennzeichnet, dass** die ersten Zeitabstände zwischen 20 Sekunden und 3 Minuten betragen.

9. Verfahren nach einem der vorstehenden Ansprüche, **dadurch gekennzeichnet, dass** die zweiten Zeitabstände zwischen 50 ms und 200 ms betragen.

10. Verfahren nach einem der vorstehenden Ansprüche, **dadurch gekennzeichnet, dass** n eine natürliche Zahl zwischen zwischen 4 und 6 ist.

11. Verfahren nach einem der vorstehenden Ansprüche, **dadurch gekennzeichnet, dass** jedes Datentelegramm (F) einen Abschnitt enthält, der angibt, ob die in diesem Datentelegramm (F) enthaltenen Druckdaten um mehr als einen vorgegeben Schwellenwert von den Druckdaten der letzten Datensendung (D) abweichen.

12. Reifendrucküberwachungseinheit mit einem Drucksensor (1a) zur Messung von Reifendruck und einem Sender (1e) zum drahtlosen Übertragen von Reifendruckdaten, **dadurch gekennzeichnet, dass** die Reifendrucküberwachungseinheit (1) im Betrieb ein Verfahren nach einem der vorstehenden Ansprüche durchführt.

## Claims

1. Method for monitoring tyre pressure of a vehicle tyre by means of a tyre pressure monitoring unit (1) which comprises a pressure sensor (1a) for measuring tyre pressure and a transmitter (1e) for wirelessly transmitting tyre pressure data,
wherein pressure data are transmitted in a first operating mode of the tyre pressure monitoring unit (1) in that data transmissions (D) are made at first time intervals (t1), each containing a plurality of data telegrams (F) with identical pressure data which follow one another at second time intervals (t2) which are less than 1% of the first time intervals (t1), and
wherein in a second operating mode of the tyre pressure monitoring unit (1) at least some of the data transmissions (D), which follow one another at first time intervals (t1), consist only of a single data telegram (F), **characterised in that**
in the second operating mode, every nth data transmission (D) consists of several data telegrams (F) and the remaining data transmissions (D) consist of only a single data telegram (F), where n is a natural number between 3 and 10.

2. Method according to claim 1, **characterised in that** pressure data is transmitted in the first operating mode when the tyre temperature exceeds an upper threshold value, preferably more than 100°C.

3. Method according to any one of the preceding claims, **characterised in that** pressure data is transmitted in the first operating mode if a change in the tyre pressure since the last data transmission (D) exceeds a threshold value.

4. Method according to any one of the preceding claims, **characterised in that** the tyre pressure monitoring unit (1) switches to the first operating mode when driving starts.

5. Method according to any one of the preceding claims, **characterised in that** a necessary or a sufficient condition for a transition of the tyre pressure monitoring unit (1) to the second operating state is that a change in the tyre pressure since the last data transmission (D) is below a threshold value.

6. Method according to any one of the preceding claims, **characterised in that** a necessary or a sufficient condition for a transition of the tyre pressure monitoring unit (1) to the second operating state is that a temperature measured by a temperature sensor (1b) of the tyre pressure monitoring unit (1) is within a predetermined temperature range.

7. Method according to any one of the preceding claims, **characterised in that** a necessary or a sufficient condition for a transition of the tyre pressure monitoring unit (1) to the second operating state is that a predetermined time has elapsed since the start of the journey.

8. Method according to any one of the preceding claims, **characterised in that** the first time intervals are between 20 seconds and 3 minutes.

9. Method according to any one of the preceding claims, **characterised in that** the second time intervals are between 50 ms and 200 ms.

10. Method according to any one of the preceding claims, **characterised in that** n is a natural number between 4 and 6.

11. Method according to any one of the preceding claims, **characterised in that** each data telegram (F) contains a section which indicates whether the print data contained in this data telegram (F) deviates by more than a predetermined threshold value from the print data of the last data transmission (D).

12. Tyre pressure monitoring unit with a pressure sensor (1a) for measuring tyre pressure and a transmitter (1e) for wireless transmission of tyre pressure data, **characterised in that** the tyre pressure monitoring unit (1) performs a method according to any one of the preceding claims during operation.

## Revendications

1. Procédé de surveillance de la pression de pneu d'un véhicule au moyen d'une unité de surveillance de pression de pneu (1) qui contient un capteur de pression (1a) pour mesurer la pression de pneu et un émetteur (1e) pour transmettre sans fil des données de pression de pneu,
dans lequel des données de pression étant transmises dans un premier mode de fonctionnement de l'unité de surveillance de pression de pneu (1), en ce sens que des transmissions de données (D) sont effectuées à des premiers intervalles de temps (t1), chacun contenant plusieurs télégrammes de données (F) avec des données de pression identiques qui se succèdent à des seconds intervalles de temps (t2) qui sont inférieurs à 1 % des premiers intervalles de temps (t1), et
dans lequel, dans un second mode de fonctionnement de l'unité de surveillance de pression de pneu (1), au moins certaines des transmissions de données (D), qui se succèdent à des premiers intervalles de temps (t1), ne consistent qu'en un seul télégramme de données (F),
**caractérisé par le fait que**
dans le second mode de fonctionnement, chaque nième transmission de données (D) consiste en plusieurs télégrammes de données (F) et les autres transmissions de données (D) consistent en un seul télégramme de données (F), où n est un nombre naturel compris entre 3 et 10.

2. Procédé selon la revendication 1, **caractérisé par le fait que** des données de pression sont transmises dans le premier mode de fonctionnement lorsque la température de pneu dépasse une valeur seuil supérieure, de préférence est supérieure à 100°C.

3. Procédé selon l'une des revendications précédentes, **caractérisé par le fait que** des données de pression sont transmises dans le premier mode de fonctionnement si un changement de la pression de pneu depuis la dernière transmission de données (D) dépasse une valeur seuil.

4. Procédé selon l'une des revendications précédentes, **caractérisé par le fait que** l'unité de surveillance de pression de pneu (1) passe au premier mode de fonctionnement lorsque la conduite commence.

5. Procédé selon l'une des revendications précédentes, **caractérisé par le fait qu'**une condition nécessaire ou suffisante pour le passage de l'unité de surveillance de pression de pneu (1) au second état de fonctionnement est qu'une variation de la pression de pneu depuis la dernière transmission de données (D) est inférieure à une valeur seuil.

6. Procédé selon l'une des revendications précédentes, **caractérisé par le fait qu'**une condition nécessaire ou suffisante pour le passage de l'unité de surveillance de pression des pneu (1) au second état de fonctionnement est qu'une température mesurée par un capteur de température (1b) de l'unité de surveillance de pression de pneu (1) se situe dans une plage de température prédéterminée.

7. Procédé selon l'une des revendications précédentes, **caractérisé par le fait qu'**une condition nécessaire ou suffisante pour le passage de l'unité de surveillance de pression de pneu (1) au second état de fonctionnement est qu'un temps prédéterminé s'est écoulé depuis le début du voyage.

8. Procédé selon l'une des revendications précédentes, **caractérisé par le fait que** les premiers intervalles de temps sont compris entre 20 secondes et 3 minutes.

9. Procédé selon l'une des revendications précédentes, **caractérisé par le fait que** les seconds intervalles de temps sont compris entre 50 ms et 200 ms.

10. Procédé selon l'une des revendications précédentes, **caractérisé par le fait que** n est un nombre naturel compris entre 4 et 6.

11. Procédé selon l'une des revendications précédentes, **caractérisé par le fait que** chaque télégramme de données (F) contient une section qui indique si les données de pression contenues dans ce télégramme de données (F) s'écartent de plus d'une valeur seuil prédéterminée des données de pression de la dernière transmission de données (D).

12. Unité de surveillance de pression de pneu avec un capteur de pression (1a) pour mesurer la pression de pneu et un émetteur (1e) pour la transmission sans fil des données de pression de pneu, **caractérisée par le fait que** l'unité de surveillance de pression de pneu (1) exécute un procédé selon l'une des revendications précédentes pendant le fonctionnement.
